# EUROPEAN PATENT SPECIFICATION

(11) **EP 2 039 258 B1**
(45) Date of publication and mention of the grant of the patent: **15.09.2010**
(21) Application number: 08252282.2
(22) Date of filing: 04.07.2008
(51) Int. Cl.: A23N 15/00, A23N 15/04, B26D 3/26

(54) **Tipping and tailing machine for vegetables**
Anlage zum Ausschneiden von Gemüse und zum Entfernen von Gemüse-Enden
Machine pour la coupe de légumes et de leurs extrémités

(30) Priority: 18.09.2007 GB 0718232
(43) Date of publication of application: 25.03.2009
(73) Proprietor: Everett Bros. Engineering Limited, Thetford IP26 4JQ (GB)
(72) Inventor: Everett, Brian, Thetford IP26 4JQ (GB); Everett, Bernard, Thetford IP25 7EZ (GB)
(74) Representative: Simons, Alison

(56) References cited:
- EP-A- 1 878 351
- WO-A-00/64288
- GB-A- 1 551 153
- GB-A- 2 226 753
- US-A- 3 669 240
- US-A- 4 367 675
- US-A- 5 320 033

## Description

This invention relates to a machine for tipping and tailing vegetables. The machine is particularly designed for tipping and tailing carrots, but could also be used for tipping and tailing other vegetables. Although the invention is not restricted to use with carrots, it will be described in this specification with particular reference to carrots.

Carrots are a very versatile vegetable. As well as being sold "as grown", there is a demand for carrot pieces cut to specific sizes, and for machines to cut carrots into specific sizes. In mechanised vegetable treatment apparatus, the vegetables are fed into the apparatus from a hopper. In respect of carrots and other elongate vegetables, the carrots can be lined up as they pass into the machine, but it is difficult to align them mechanically so that they are either "top first " or "tail first".

From US-5320033 an apparatus is known for topping and tailing vegetables, such as carrots, which are carried in holders mounted on a conveyor belt towards rotating blades.

The invention provides apparatus which will reliably both top and tail carrots, irrespective of the orientation in which they are introduced into the machine.

According to the present invention, there is provided a machine for tipping and tailing elongate products, the apparatus comprising a continuous belt running around a track, the track lying in a plane which is inclined to the horizontal, the belt carrying elongate product guides attached to the belt and each arranged with their long axes extending radially relative to the belt and lying in the plane of the track, means for driving the belt in rotation around the track, a first blade arranged at the lower end of an upper run of the belt, and a second blade arranged at the lower end of a lower run of the belt.

The track is preferably oval with the belt running around two pulleys, the pulleys also lying in the plane of the track

The belt may be made from any material. Preferably the belt is in the form of a chain which can be engaged with drive sprockets, but it may be possible to use other type of belts, for example a toothed rubber belt.

The guides and the angle of inclination (which is preferably between 40° and 50°, ideally 45°) are arranged so that the carrots will always slide to the lower end of the guide. When a carrot is introduced to a guide on the upper run, it will slide down the guide until one end lies against a fence at the lower end of the guide. The belt will then advance the guide so that the carrot passes the position of the first blade, where an end of the carrot will be cut off. The belt than drives the guide around one of the pulleys which results in the what was the lower end of the guide becoming the upper end. The carrot will then slide down the guide under the influence of gravity (and possible centrifugal force) so that the uncut end is at the (new) bottom of the guide, and that end will then be cut off.

The blades are preferably continuously rotating cut-off discs.

The track can include low-friction bearers and the product guides slide on those bearers as the guides move around the track. The whole length of the belt is occupied by product guides, so that a continuous stream of carrots or other products arriving at the machine will always fall into one or other of the guides.

There may be a number of second blades arranged at the lower end of the lower run of the belt. All these blades can be parallel to one another and spaced apart by a distance equal to the desired segment size into which the product is to be cut. The product guides can be provided with slots aligned with the positions of the blades.

Fences are preferably provided at the lower ends of the product guides at those places where the guides will, in use, contain products.

The machine is primarily intended for tipping and tailing carrots, but can find other uses.

The invention will now be further described, by way of example, with reference to the accompanying drawings, in which:
- Figure 1: is a perspective view of a machine in accordance with the invention with all but one of the product guides removed;
- Figure 2: is a view corresponding to Figure 1, with a full population of product guides;
- Figure 3: is an end view of the machine of Figures 1 and 2;
- Figure 3a: is a schematic section on the line A-A through the machine of Figure 2, with the blades and other components omitted,;
- Figure 4: is a perspective view of a single product guide; and
- Figure 5: is a view from underneath of the guide of Figure 4.

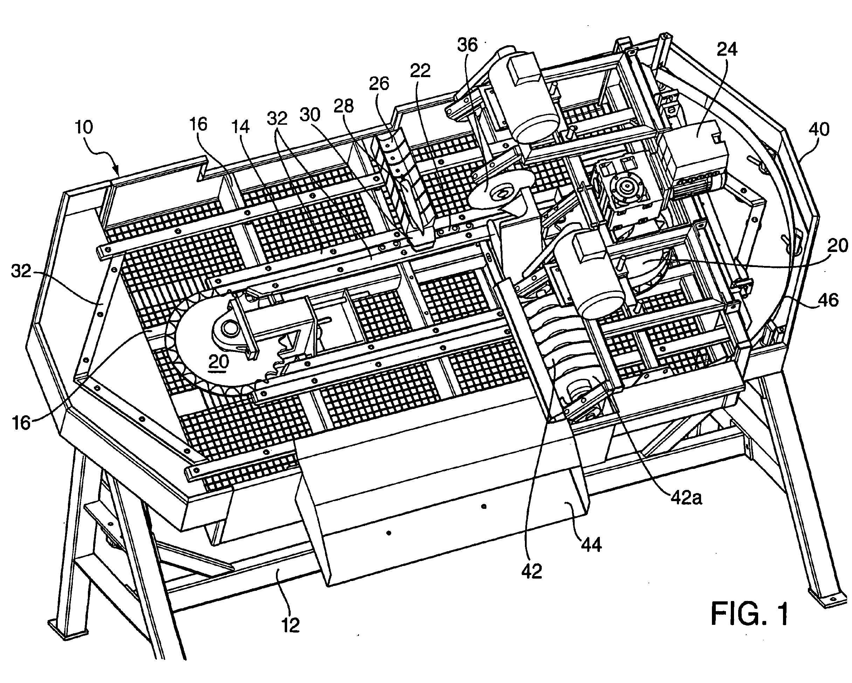

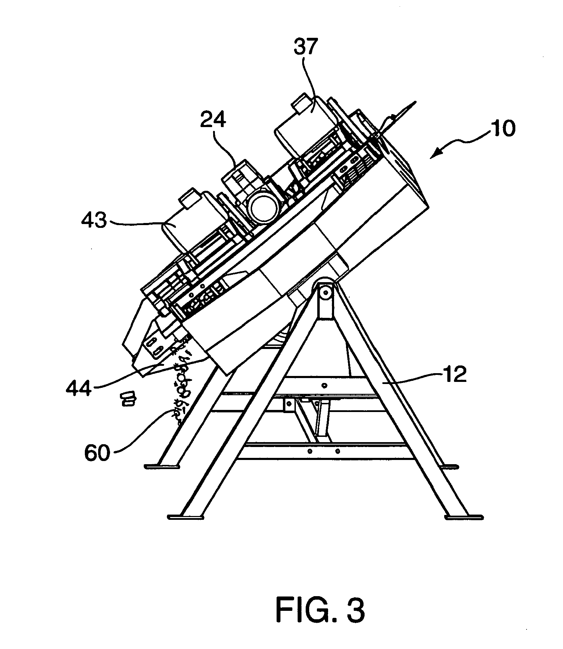

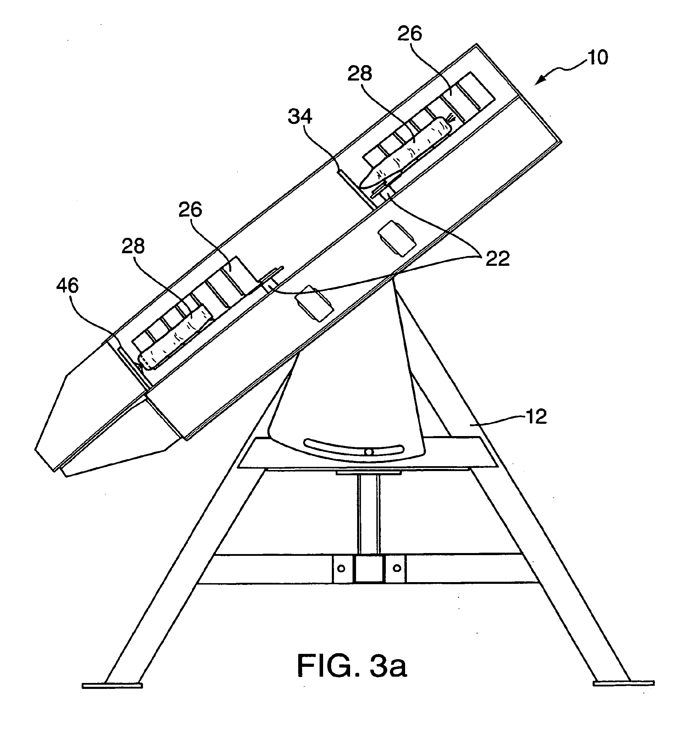

The machine shown in the figures has a table 10 mounted on a stand 12. As can be seen in Figure 3, the table 10 is set at an angle to the horizontal, preferably 45°. The table has an open base covered by a wire mesh 14, and a framework 16 which supports a drive assembly in the centre of the table. The drive assembly comprises two toothed sprocket wheels 20, and a chain 22 runs around these sprocket wheels. In Figure 1, only a short section of the chain 22 is shown, but it will be understood that the chain will extend in a continuous loop around both the wheels 20.

The right-hand wheel 20 is driven by a motor 24.

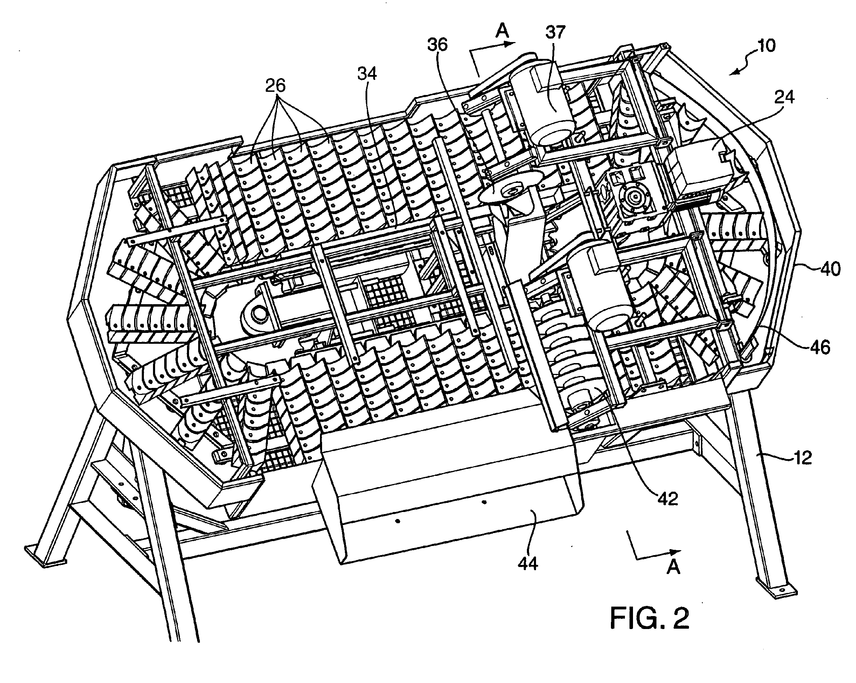

Mounted on the chain 22 are a series of trough-like product guides 26. In Figure 1 only one of these guides 26 is shown, and a representative carrot 28 is shown in this guide. The inner end 30 of the guide is fixed to the chain 22, so that as the chain rotates, the guide 26 travels around the path of the chain. The guide rests on slide bearers 32, so that the guides can travel around the table with minimum friction. Because of the slant of the table, the carrot 28 in the guide 26 will slide down the guide until its tip rests against a fence 34 (see Figure 2) which is spaced a short distance from the end of the guide.

As the motor 24 drives the chain 22, the guide 26 will be advanced in a clockwise direction towards a rotating blade 36. The blade 36 is driven by a motor 37 and the position of the blade will be set between the lower end of the guide 26 and the fence 34, so that when the carrot arrives at the blade, the blade will cut off the end of the carrot which was resting against the fence and projecting beyond the end of the guide. The cut end will drop through the table into a suitable collection chamber, and the guide 26 will continue on its path around the table.

Because the guide is attached to the chain only at its inboard end, the guide will move from the vertical, through the horizontal and back to the vertical, as it passes around the end 40 of the table. The end of the guide which was uppermost then becomes lowermost. This can be seen in Figure 2. Once the guide has passed through the horizontal position and moves on towards a vertical position, gravity will result in the carrot sliding along the guide to the other end of the guide where there is a second fence 46. Figure 3a illustrates schematically the arrangement of the guides 26 and the fences 34 and 46 and the gap between the lower ends of the guides and the respective fences.

Then in the bottom run of the track, the carrot will encounter a set of blades 42, and the bottom most of these blades 42a will cut off the end of the carrot opposite to the end which was cut by the blade 36. The blades 42 are all driven by the same motor 43, and all rotate at the same speed.

In this embodiment, there are a series of spaced blades 42, so that the carrot can at this point be cut into individual segments, each having a length equal to the distance between the blades 42. The individual lengths 60 will then drop out through a chute 44.

Depending on the speed of rotation imparted by the motor 24, the carrots in the guides 26 may also be urged outwards by centrifugal force, and the fence 46 extends around the end 40 of the table to ensure that the carrots are not flung out of the guides 26.

Figure 2 shows the table fully populated with guides. In use carrots 28 will be fed from a hopper through a conveyer which aligns the carrots with the longitudinal extent of the guides, and the carrots will drop into the guides 26 (neither the hopper nor the conveyor are shown in the figures). It is quite acceptable for there to be more than one carrot in each guide, but the relative speeds of the conveyer and of the chain should be such that only up to three carrots are received in each guide.

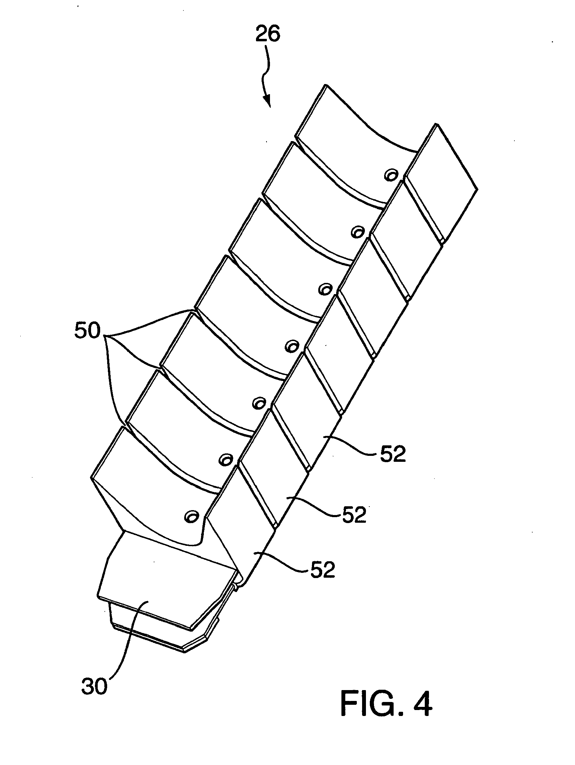

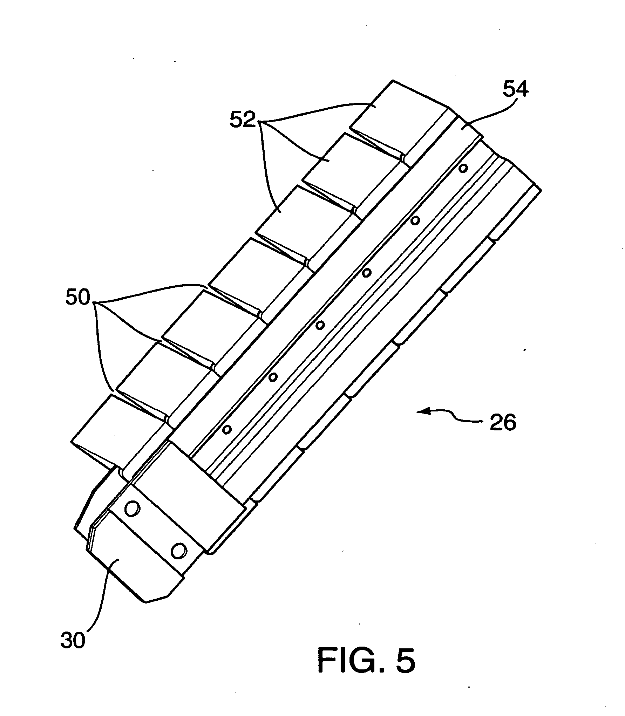

It will be seen from Figures 4 and 5 that the guides 26 are formed with six slots 50 in their upward facing surfaces. These slots are present to allow the carrots to be cut into segments, each the length between the slots 50. The blades 42 then are aligned with and pass through the slots to completely sever each carrot into separated segments. Each guide may be made up of individual moulded plastics pieces 52 mounted in line on a common base 54. The bases 54 are designed to slide on the bearers 32. At one end, each guide has a bracket 30 by means of which it can be mounted on the chain 22.

## Claims

1. A machine for tipping and tailing elongate products (28), the apparatus comprising a continuous belt (22) running around a track, the track lying in a plane which is inclined to the horizontal, the belt carrying elongate product guides (26) attached to the belt and each arranged with their long axes extending radially relative to the belt and lying in the plane of the track, means for driving the belt in rotation around the track, a first blade (36) arranged at the lower end of an upper run of the belt, and a second blade (42) arranged at the lower end of a lower run of the belt.

2. A machine as claimed in Claim 1, wherein the track is oval with the belt running around two pulleys, the pulleys also lying in the plane of the track.

3. A machine as claimed in Claim 1 or Claim 2, wherein the belt is in the form of a chain which can be engaged with drive sprockets.

4. A machine as claimed in any preceding claim, wherein the plane of the track is at between 40° and 50° to the horizontal.

5. A machine as claimed in any preceding claim, wherein the blades are continuously rotating cut-off discs.

6. A machine as claimed in any preceding claim, wherein the track includes low-friction bearers and the product guides slide on those bearers as the guides move around the track.

7. A machine as claimed in any preceding claim, wherein the product guides are arranged side by side along the whole length of the belt.

8. A machine as claimed in any preceding claim, wherein a plurality of second blades arranged at the lower end of the lower run of the belt, all the blades being parallel to one another and being spaced apart by a distance equal to the desired dimension into which the product is to be cut.

9. A machine as claimed in Claim 8, where the product guides are provided with slots aligned with the positions of the blades.

10. A machine as claimed in any preceding claim, wherein fences are provided at the lower ends of the product guides at those places where the guides will, in use, contain products.

11. A machine as claimed in any preceding claim for tipping and tailing carrots.

## Patentansprüche

1. Maschine zum Abtrennen von Spitzen und Enden von länglichen Produkten (28), wobei der Apparat ein um eine Bahn laufendes Endlosband (22), wobei die Bahn in einer zur Horizontalen geneigten Ebene liegt und das Band Führungen (26) für längliche Produkte trägt, die am Band angebracht und jeweils so angeordnet sind, dass sich ihre langen Achsen radial zum Band erstrecken und in der Ebene der Bahn liegen, Mittel zum Antrieb des Bands in Rotation um die Bahn, ein erstes Messer (36), das am unteren Ende eines oberen Laufs des Bands angeordnet ist, und ein zweites Messer (42), das am unteren Ende eines unteren Laufs des Bands angeordnet ist, umfasst.

2. Maschine nach Anspruch 1, wobei die Bahn oval ist und das Band um zwei Riemenscheiben läuft, die auch in der Ebene der Bahn liegen.

3. Maschine nach Anspruch 1 oder 2, wobei das Band in Form einer Kette vorliegt, die mit Antriebskettenrädern in Eingriff gebracht werden kann.

4. Maschine nach einem der vorhergehenden Ansprüche, wobei die Ebene der Bahn zwischen 40° und 50° zur Horizontalen liegt.

5. Maschine nach einem der vorhergehenden Ansprüche, wobei es sich bei den Messern um sich kontinuierlich drehende Abtrennscheiben handelt.

6. Maschine nach einem der vorhergehenden Ansprüche, wobei die Bahn Stützen mit niedriger Reibung aufweist und die Produktführungen auf diesen Stützen gleiten, während sich die Führungen um die Bahn herum bewegen.

7. Maschine nach einem der vorhergehenden Ansprüche, wobei die Produktführungen nebeneinander entlang der gesamten Länge des Bands angeordnet sind.

8. Maschine nach einem der vorhergehenden Ansprüche, wobei mehrere zweite Messer am unteren Ende des unteren Laufs des Bands angeordnet sind, wobei alle Messer parallel zueinander liegen und der Abstand zwischen ihnen der Größe entspricht, zu der das Produkt geschnitten werden soll.

9. Maschine nach Anspruch 8, wobei die Produktführungen mit Schlitzen versehen sind, die mit den Positionen der Messer fluchten.

10. Maschine nach einem der vorhergehenden Ansprüche, wobei an den unteren Enden der Produktführungen an den Stellen Gitter vorgesehen sind, an denen die Führungen im Gebrauch Produkte enthalten.

11. Maschine nach einem der vorhergehenden Ansprüche zum Abtrennen von Spitzen und Enden von Karotten.

## Revendications

1. Machine pour couper les pointes et les queues de produits allongés (28), la machine comprenant une bande sans fin (22) passant autour d'un rail, le rail reposant dans un plan qui est incliné par rapport à l'horizontale, la bande portant des guides de produits allongés (26) fixés sur la bande et disposés chacun avec leur axe longitudinal s'étendant radialement par rapport à la bande et reposant dans le plan du rail, un moyen pour entraîner la bande en rotation autour du rail, une première lame (36) disposée à l'extrémité inférieure d'une course supérieure de la bande, et une deuxième lame (42) disposée à l'extrémité inférieure d'une course inférieure de la bande.

2. Machine selon la revendication 1, dans laquelle le rail est ovale, la bande passant autour de deux poulies, les poulies se trouvant également dans le plan du rail.

3. Machine selon la revendication 1 ou la revendication 2, dans laquelle la bande a la forme d'une chaîne qui peut coopérer avec des pignons d'entraînement.

4. Machine selon l'une quelconque des revendications précédentes, dans laquelle le plan du rail est à un angle compris entre 40° et 50° par rapport à l'horizontale.

5. Machine selon l'une quelconque des revendications précédentes, dans laquelle les lames sont des disques à tronçonner tournant en continu.

6. Machine selon l'une quelconque des revendications précédentes, dans laquelle le rail inclut des supports à faible coefficient de frottement et les guides de produits glissent sur ces supports lorsque les guides se déplacent autour du rail.

7. Machine selon l'une quelconque des revendications précédentes, dans laquelle les guides de produits sont disposés côte à côte le long de la longueur totale de la bande.

8. Machine selon l'une quelconque des revendications précédentes, dans laquelle une pluralité de deuxièmes lames est disposée à l'extrémité inférieure d'une course inférieure de la bande, toutes les lames étant parallèles les unes aux autres et espacées d'une distance égale à la dimension désirée à laquelle le produit doit être coupé.

9. Machine selon la revendication 8, dans laquelle les guides de produits sont munis de fentes alignées par rapport aux positions des lames.

10. Machine selon l'une quelconque des revendications précédentes, dans laquelle des barrières sont prévues aux extrémités inférieures des guides de produits aux endroits où, pendant l'utilisation, les guides contiendront les produits.

11. Machine selon l'une quelconque des revendications précédentes pour couper les pointes et les queues de carottes.
